(19) Europäisches Patentamt
European Patent Office
Office européen des brevets

(11) Veröffentlichungsnummer : **0 180 651**
**B1**

(12) # EUROPÄISCHE PATENTSCHRIFT

(45) Veröffentlichungstag der Patentschrift : **07.09.88**

(51) Int. Cl.[4] : **G 11 B 5/708**, G 11 B 5/712

(21) Anmeldenummer : **84113054.5**

(22) Anmeldetag : **31.10.84**

(54) **Magnetplatte und Verfahren zu ihrer Herstellung.**

(43) Veröffentlichungstag der Anmeldung : **14.05.86 Patentblatt 86/20**

(45) Bekanntmachung des Hinweises auf die Patenterteilung : **07.09.88 Patentblatt 88/36**

(84) Benannte Vertragsstaaten :
**DE FR GB**

(56) Entgegenhaltungen :
**DE-A- 3 123 012**
**DE-A- 3 149 764**
**DE-A- 3 339 003**
**FR-A- 2 096 031**
**FR-A- 2 181 874**
**US-A- 4 076 890**

(73) Patentinhaber : **IBM DEUTSCHLAND GMBH**
**Pascalstrasse 100**
**D-7000 Stuttgart 80 (DE)**
**DE**
**International Business Machines Corporation**
**Old Orchard Road**
**Armonk, N.Y. 10504 (US)**
**FR GB**

(72) Erfinder : **Bandara, Upoli, Dr.**
**Widmaierstrasse 146**
**D-7000 Stuttgart 80 (DE)**
Erfinder : **Hinkel, Holger, Dr.**
**Zeisigweg 13**
**D-7030 Böblingen (DE)**
Erfinder : **Steiner, Werner**
**Zeisigweg 17/1**
**D-7030 Böblingen (DE)**
Erfinder : **Trippel, Gerhard, Dr.**
**Steinenbronner Strasse 15**
**D-7032 Sindelfingen (DE)**

(74) Vertreter : **Oechssler, Dietrich, Dr. rer. nat.**
**IBM Deutschland GmbH Patentwesen und Urheberrecht Schönaicher Strasse 220**
**D-7030 Böblingen (DE)**

**EP 0 180 651 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Magnetplatte, welche eine auf einem Substrat aufgebrachte, aus einem Bindemittel, wie z. B. einem Harz, magnetischen Partikeln und aus einem abriebfesten Material bestehenden Partikeln bestehende Magnetschicht aufweist, und ein Verfahren zum Herstellen einer solchen Magnetplatte, bei dem auf ein Substrat eine Dispersion aus dem Bindemittel, magnetischen Partikeln und abriebfesten Partikeln gleichmäßig aufgebracht und dann gehärtet wird. Unter Bindemittel wird sowohl die Matrix verstanden, in welche die abriefesten und magnetischen Teilchen in der fertigen Magnetschicht eingebaut sind, als auch das Material, welches erst im Laufe der Herstellung der Magnetschicht in diese Matrix umgewandelt wird.

Derzeit eingesetzte Magnetplatten hoher Leistung weisen ein Substrat, bevorzugt aus Aluminium, Aluminium-Magnesium oder Silicium, und eine darauf aufgebrachte — bevorzugt ungefähr 1 µm dicke — Magnetschicht auf, welche ein mit magnetischen Partikeln gefülltes Harz enthält. Damit die Magnetplatte der Einwirkung des harten Magnetkopfes aus keramischem Material widerstehen kann, der in der Start/Stop-Phase auf der Platte schleift, ist das Harz zusätzlich mit Aluminiumoxidpartikeln, welche ungefähr 2 Vol.-% der Beschichtung ausmachen und eine angenähert runde Gestalt haben, gefüllt. Tatsächlich schleift daher der Magnetkopf nicht direkt auf dem Harz, sondern auf den Aluminiumoxidpartikeln, welche als Stützpunkte dienen. Hergestellt werden solche Magnetplatten, indem auf das Substrat eine die magnetischen und die abriebfesten Partikel, das Bindemittel und ein Lösungsmittel enthaltende Dispersion aufgeschleudert und anschließend gehärtet wird und dann die Oberfläche der entstandenen Magnetschicht poliert wird. Im Prinzip würde die so hergestellte Beschichtung allen Anforderungen genügen, wenn die Haftung der Aluminiumoxidpartikel in der Harzmatrix gut wäre. Dies ist jedoch keineswegs der Fall ; vielmehr wird im Betrieb der Platte häufig ein Ausbrechen von Aluminiumoxidpartikeln beobachtet. Dieses Ausbrechen führt dazu, daß die Platte dort, wo ein Aluminiumoxidpartikel herausgeschlagen worden ist, erhöhtem Abrieb unterliegt, und daß die dann auf der Plattenoberfläche liegenden harten Aluminiumoxidpartikel zu einer Abnutzung der Plattenoberfläche und des Magnetkopfes beitragen und schließlich zu einem vorzeitigen Ausfall des aus Magnetplatte und Magnetkopf bestehenden Systems führt. Dieses Problem tritt bereits bei Funktionstests nach Abschluß der Plattenfertigung oder dann, wenn die Platte beim Kunden eingesetzt wird, auf und hat deshalb schwerwiegende Einbrüche in der Fertigung und einen hohen Wartungsaufwand verursacht.

Es ist deshalb die Aufgabe der Erfindung, eine Magnetplatte der eingangs genannten Art, bei welcher die abriebfesten Teilchen auch dann, wenn der Magnetkopf über die Platte schleift, fest verankert bleiben und keine Gefahr für den Magnetkopf darstellen, und ein Verfahren anzugeben, mit dem eine solche Magnetplatte reproduzierbar unter Einhaltung enger Toleranzen in einer fabrikmäßigen Fertigung hergestellt werden kann.

Diese Aufgabe wird mit einer Magnetplatte der eingangs genannten Art mit den Merkmalen des kennzeichnenden Teils des Patentanspruchs 1 mit einem Verfahren der eingangs genannten Art mit dem Merkmal des kennzeichnenden Teils des Patentanspruchs 6 gelöst.

Die umhüllende Schicht haftet fest auf den abriebfesten Partikeln und vermag aufgrund ihrer Struktur oder ihrer chemischen Eigenschften eine sehr starke Bindung mit dem Bindemittel einzugehen. Dabei verändern sich die wesentlichen Eigenschaften der abriebfesten Partikel, nämlich ihre Gestalt und ihre Abriebfestigkeit, nicht wesentlich.

Die erfindungsgemäße Magnetplatte unterscheidet sich von den bekannten Magnetplatten nur dadurch, daß die abriebfesten Partikel umhüllt sind. Die übrigen Bestandteile der Magnetplatte, d. h. das Substrat, das bevorzugt aus Epoxidharz bestehende Bindemittel und die magnetischen Teilchen bleiben unverändert. Deshalb genügt die erfindungsgemäße Magnetplatte den für die bekannte Magnetplatte festgelegten magnetischen Spezifikationen. Weiter unten werden zwei vorteilhafte Arten der Umhüllung, welche die Bindung zwischen dem Bindemittel und den abriebfesten Partikeln verstärken, beschrieben. Sie verstärken unterschliedlich effektiv und entsprechend unterschiedlich ist der Aufwand, welcher erforderlich ist, um die Umhüllung herzustellen. D. h. mit anderen Worten, daß je nach den Anforderungen, welche an die Magnetplatten gestellt werden, die passende Umhüllung bereitgestellt werden kann.

Zwar ist aus der FR-A-2 181 874 eine Magnetschicht bekannt, welche neben den Magnetteilchen und dem Bindemittel noch ein oberflächenaktives Pigmentpulver enthält, dessen Teilchen mit einer Schicht umhüllt sind, und aus der DE-A-3 339 003 ist außerdem ein Magnetfilm bekannt, in dem die Magnetteilchen umhüllt sind, um ihre Dispergierbarkeit im Bindemittel und damit die Haltbarkeit des Magnetfilms zu verbessern. Aus den genannten Offenlegungsschriften sind aber Magnetschichten, welche beschichtete, abriebfeste Partikel enthalten, nicht bekannt.

Das erfindungsgemäße Verfahren unterscheidet sich nur dadurch von dem üblichen Verfahren zur Herstellung der bekannten Magnetschichten, die aus Bindemittel und magnetischen und abriebfesten Partikeln bestehen, daß der bekannten Folge von Verfahrensschritten der Prozess der Umhüllung der abriebfesten Partikel vorangeht. Bei Einführung des erfindungsgemäßen Verfahrens ist deshalb keine Umstellung des bisher angewandten Verfahrens notwendig und auch umfangreiche Untersuchungen zum Feststellen, ob das erfindungsgemäße Verfahren mit dem bisherigen Verfahren kompatibel ist, sind entbehrlich. Der Prozess der Umhüllung ist eine nicht naheliegende Kombination von bekannten in der

präparativen Chemie gängigen und unkritischen Verfahrensschritten.

Es ist vorteilhaft, wenn die abriebfesten Partikel in der erfindungsgemäßen Magnetschicht einen Durchmesser haben, welcher wesentlich kleiner als die Dicke der Magnetschicht ist. Vorzugsweise sind die Durchmesser der abriefesten Partikel um den Faktor 2 bis 10 kleiner als die Dicke der Magnetschicht. Da festgestellt worden war, daß die Verankerung der abriebfesten Partikel umso besser ist, je größer sie sind, haben die abriebfesten Partikel in den bekannten Magnetplatten, wie z. B. diejenigen, die in der FR-A-2 096 031 beschrieben sind, üblicherweise einen Durchmesser, der größenordnungsmäßig gleich der Dicke der Magnetschicht ist. Es hat sich aber gezeigt, daß große abriebfeste Partikel in der Magnetschicht zu magnetischen Fehlern, z. B. infolge von Lesesignalverlusten und einem hohen Grundgeräuschpegel führen. Auch haben große abriebfeste Partikel die Tendenz, aus der Oberfläche der Magnetschicht herauszuragen. Die aus der Oberfläche herausragenden Partikel sind vermehrt der Gefahr des Herausbrechens ausgesetzt und stellen auch im nicht herausgebrochenen Zustand eine Gefahr für den Magnetkopf dar, den sie verunreinigen und beschädigen können. Außerdem treten bei unebener Magnetschichtoberfläche Probleme mit der Flughöhe des Magnetkopfes auf. Das Herausragen der Partikel aus der Magnetschichtoberfläche ist auf die elastische Relaxation zurückzuführen. Darunter ist zu verstehen, daß, wenn die bei der Herstellung der Magnetplatte eingesetzten Partikel größer sind, als die polierte Magnetschicht dick ist, die Partikel unter dem Druck der Polierscheibe in das Substrat hineingedrückt werden, und dann, wenn der Druck weggenommen wird, senkrecht zur Substratoberfläche nach oben gedrückt werden, so daß sie aus der polierten Oberfläche herausragen. Anhand der Fig. 1 wird dieses Problem veranschaulicht. Auch die anderen genannten Probleme, mit großen abriebfesten Partikeln in Magnetplatten, sind auf Schwierigkeiten zurückzuführen, die diese Partikel bei der Herstellung der Magnetplatten verursachen :

Bei der Herstellung der Magnetschicht aus dem Bindemittel und magnetische und abriebfeste Partikel enthaltenden magnetischen Lack neigen die magnetischen Partikel dazu Anhäufungen an den abriebfesten Partikeln zu bilden und zwar umso mehr, je größer diese sind. Dadurch wird das Orientieren der magnetischen Partikel gestört. Beim Aufschleudern der Dispersion treten außerdem, wenn die abriebfesten Partikel groß sind, Dreiecksfehler auf. Darunter sind dreieckförmige Fehlstellen in der Magnetschicht zu verstehen, bei denen an einer Ecke des Dreiecks sich jeweils ein abriebfestes Partikel befindet, das offensichtlich den Fluß des magnetischen Lacks behindert.

Bei den erfindungsgemäßen Magnetplatten können die abriebfesten Partikel kleiner sein als bei den bekannten Magnetplatten, weil bei den erfindungsgemäßen Magnetplatten die bessere Verankerung auf anderem Weg erreicht wird. Werden aber kleine abriebfeste Partikel verwendet, werden alle obengenannten mit den großen Partikeln im Zusammenhang stehenden Nachteile und Schwierigkeiten vermieden.

Es ist günstig, wenn die einhüllende Schicht aus $SiO_2/Al_2O_3$ besteht. Die genannte Schicht hat eine spezifische Oberfläche, welche ungefähr 10 mal größer ist als die spezifische Oberfläche beispielsweise von Aluminiumoxidpartikeln und ungefähr 5 mal größer als wenn die einhüllende Schicht nur aus $SiO_2$ besteht. Die Ursache für die vergrößerte spezifische Oberfläche ist nicht bekannt. Die vergrößerte Oberfläche verbessert die Haftung der abriebfesten Partikel beachtlich. Die vergrößerte Oberfläche verbessert auch die Benetzbarkeit mit dem Gleitmittel. Da die Berührung hauptsächlich zwischen Magnetkopf und den Aluminiumoxidpartikeln stattfindet, wird durch die bessere Benetzbarkeit die Reibungskraft genau an den entscheidenden Stellen verringert. Auch dadurch wird die Gefahr, daß bei der Berührung mit dem Magnetkopf abriebfeste Partikel herausgerissen werden, wesentlich vermindert. Die $SiO_2/Al_2O_3$-Schicht haftet ausgezeichnet auf Partikeln aus hartem keramischem Material, vorzugsweise aus Aluminiumoxid, Siliciumcarbid oder Siliciumnitrid.

In vorteilhafter Weise werden die abriebfesten Partikel mit der $SiO_2/Al_2O_3$-Schicht eingehüllt, indem die Partikel in Wasser aufgeschwemmt und auf etwa 90 °C erhitzt werden, wobei ein $p_H$-Wert von ungefähr 10 durch Zugabe von Natriumhydroxyd eingestellt wird, in dem anschließend eine Natriumsilicatlösung zugegeben und dann der $p_H$-Wert auf ungefähr 9 abgesenkt wird, indem diese Mischung eine Stunde dispergiert und daraufhin eine Aluminiumsulfatlösung zugesetzt und der $p_H$-Wert auf ungefähr 8 reduziert wird und daß schließlich nocheinmal eine Stunde bei 93-97 °C dispergiert wird. Die Umhüllung wird also mittels einer nicht naheliegenden Kombination unkritischer, reproduzierbarer und in der präparativen anorganischen Chemie üblicher Verfahrensschritte erzeugt. Die große Oberfläche der umhüllten, abriebfesten Partikel, welche dann vorliegen, wirkt sich auch positiv bei dem erfindungsgemäßen Verfahren zur Herstellung von Magnetplatten aus. Die vergrößerte Oberfläche bewirkt nämlich eine bessere Dispergierbarkeit und eine bessere Stabilität der Dispersion bei Herstellung der Magnetschicht. Dies führt zu einer gleichmäßigeren Verteilung der Aluminiumoxidpartikel in der Magnetschicht und damit zur Vermeidung von Agglomeraten, die die Ursache für negative magnetische und mechanische Effekte sind.

Bei einer weiteren günstigen Ausführungsform der erfindungsgemäßen Magnetplatte bestehen die abriebfesten Partikel aus einem harten Oxid mit OH-Gruppen an der Partikeloberfläche, wie z. B. Aluminiumoxid und sind mit einer zwischen ungefähr 10 und etwa 50 nm dicken Schicht aus Teflon® eingehüllt. Dabei ist es vorteilhaft, wenn das Teflon mit dem Oxid über eine Siloxanbrücke gegenenfalls als einen Initiatorrest und mit dem bevorzugt aus Epoxidharz bestehenden Bindemittel über eine Aminbrücke chemisch verbunden ist. Sind die Oxidpartikel chemisch mit dem Bindemittel verbunden, so ist ihre Verankerung optimal, d. h. daß bei dieser Ausführungsform alle Vorteile einer festen Verankerung

der Oxidpartikel kleiner als üblich zu machen, in besonderem Maß gegeben. Die Einhüllung der Oxidpartikel mit Teflon hat aber noch den weiteren Vorteil, daß der freiliegende Teil der Oxidpartikel in der Magnetschichtoberfläche teilweise mit Teflon beschichtet ist und insbesondere auch an der Magnetschichtoberfläche die Zwischenräume zwischen dem Bindemittel und dem Oxid mit Teflon gefüllt sind. Dies führt zu einem wesentlich verbesserten Gleiten des Magnetkopfes auf der Magnetplatte und zwar ist einmal die Benetzung mit dem Gleitmittel und dessen Ersatz durch Nachfließen, wenn es abgestreift worden ist, gegenüber einer Oxidoberfläche wesentlich verbessert und zum andern gewährleistet das Teflon auch im Falle einer Erschöpfung des Gleitmittels noch gute Notlaufeigenschaften.

Hergestellt wird diese Ausführungsform der erfindungsgemäßen Magnetplatte mit in Teflon eingehüllten Oxidpartikeln bevorzugt, indem die Alkoxygruppen eines Silanderivats das außerdem endständige reaktive Gruppen aufweist, mit OH-Gruppen an der Oberfläche der aus Oxid bestehenden abriebfesten Partikel zur Reaktion gebracht wird, indem das Reaktionprodukt unter Vermittlung eines Initiators mit Tetrafluorethylen copolymerisierst wird, indem in einem Plasma, das Alkylamingas enthält, Alkylaminreste an die PTFE-Ketten gepfropft werden und indem das so modifizierte, die Oxidpartikel einhüllende PTFE nach dem Aufbringen der aus dem Bindemittel und den magnetischen und abriebfesten Teilchen bestehenden Dispersion auf das Substrat bei der üblichen Vernetzungsreaktion des aus Epoxid bestehenden Bindemittels über $NH_2$-Gruppen an das Epoxidharznetzwerk gekoppelt wird. Bemerkenswert ist diese Ausführungsform des erfindungsgemäßen Verfahrens einerseits durch die ausgezeichneten Eigenschaften der mit ihr hergestellten Magnetplatte. Andererseits wird dieses Ergebnis erzielt durch eine nicht naheliegende Auswahl der verwendeten Materialien und eine nicht naheliegende Kombination von in der organischen Chemie gängigen und deshalb unkritischen, leicht steuerbaren und damit gut reproduzierbaren Prozeßschritten. Die Herstellung der Ausführungsform der erfindungsgemäßen Magnetplatte mit teflonumhüllten abriebfesten Partikeln ist zwar aufwendiger als die Ausführungsform, bei der die abriebfesten Partikel mit der $SiO_2/Al_2O_3$-Schicht eingehüllt sind, es ist aber so daß bei der erstgenannten Ausführungsform die Verankerung der Partikel im Bindemittel noch besser ist als bei der zuletztgenannten.

Weitere vorteilhafte Ausführungsformen der erfindungsgemäßen Magnetplatte und des erfindungsgemäßen Verfahrens ergeben sich aus den Unteransprüchen.

Die Erfindung wird anhand von durch Zeichnungen erläuterten Ausführungsbeispielen beschrieben.

Es zeigen :

Fig. 1 in schematischer Querschnittsdarstellung einen Ausschnit aus einer Magnetplatte gemäß dem Stand der Technik, wobei die elastische Relaxation und die beim Herausbrechen eines abriebfesten Partikels auftretenden Probleme veranschaulicht sind ;

Fig. 2 in schematischer Querschnittsdarstellung ein mit einer Oberflächenschicht eingehülltes abriebfestes Partikel, welches bei einer Ausführungsform der erfindungsgemäßen Magnetplatte Verwendung findet ; und

Fig. 3 in schematischer Strukturformeldarstellung, die für eine Ausführungsform der erfindungsgemäßen Magnetplatte charakteristische chemische Verbindung einer ein Oxidpartikel einhüllenden Teflon-Schicht einerseits mit dem Oxid und andererseits mit dem als Bindemittel dienenden Epoxidharz ;

Die Fig. 1 zeigt im Querschnitt einen Ausschnitt aus einer Magnetplatte gemäß dem Stand der Technik. Auf dem Substrat 1, welches eine runde Platte ist und aus Aluminium, einer Aluminiumlegierung, wie z. B. Aluminum Magnesium oder -Silicium oder Silicium besteht, ist die Magnetschicht 2 aufgebracht, welche aus dem Bindemittel 3 den abriebfesten Partikeln 5, welche bevorzugt aus Aluminiumoxid bestehen, und den bevorzugt aus $Fe_2O_3$ bestehenden magnetischen Partikeln 7 besteht. Die abriebfesten Partikel 5 haben angenähert Kugelform und ihr Durchmesser ist größenordnungsmäßig gleich der Dicke der Magnetschicht 2. Die Figur veranschaulicht auch das Problem der elastischen Relaxation. Darunter wird verstanden, daß, wenn die Magnetschicht 2 nach dem Härten des Bindemittels 3 poliert wird, die abriebfesten Partikel 5, welche praktisch, wenn sie vor dem Polieren größer sind, als die Magnetschicht 2 nach dem Polieren dick ist, Kontakt zum darunterliegenden Substrat 1 haben, unter dem Druck der Polierscheibe in das Substrat 1 hineingedrückt werden. Nach dem Polieren, d. h. wenn der Druck der Polierscheibe nachläßt, drückt das Substrat 1 unter Eliminierung des beim Polieren entstandenen Eindrucks das abriebfeste Partikel 5 nach oben, welches dann aus der polierten Oberfläche der Magnetschicht 2 herausragt. Der Magnetkopf, welcher im Betrieb über die Magnetplatte hinweggleitet und der in der Start/Stop-Phase mit ihr Kontakt hat, kollidiert mit den herausragenden abriebfesten Partikeln und wird dabei beschädigt und/oder reißt das Partikel aus seiner Verankerung im Bindemittel heraus. Die Folge des Herausreißens ist eine zweifache ; 1) entsteht dort wo das abriebfeste Partikel fehlt ein Oberflächenbereich auf der Magnetschicht, welcher vermehrt dem Abrieb ausgesetzt ist und 2) verursachen abriebfeste Partikel 5, welche — wie die fig. 1 veranschaulicht — auf der Magnetplattenoberfläche liegen, Beschädigungen einerseits des Magnetkopfs und andererseits der Magnetplatte.

Die erfindungsgemäße Magnetplatte unterscheidet sich dadurch von den bekannten Magnetplatten, daß die abriebfesten Partikel mit einer umhüllenden Schicht versehen sind, welche zwischen 1 und 100 nm dick ist und die Verankerung der abriebfesten Partikel im Bindemittel verstärken und daß bevorzugt der Durchmesser der abriebfesten Partikel kleiner — und zwar insbesondere und den Faktor 2 bis 10 — ist als die Dicke der Magnetschicht. Im übrigen ist die erfindungsgemässe Magnetplatte gleich aufgebaut wie die bekannten Magnetplatten, d. h. daß sie eine auf einem Plattensubstrat aufgebrachte magnetische

Schicht aufweisen, welche aus einem gehärteten Gemisch aus dem magnetischen und den abriebfesten Partikeln besteht und sie hat auch dieselben Abmessungen wie die bekannten Magnetplatten. Das Bindemittel besteht bevorzugt aus einem Material der Gruppe Epoxidharze, Polyurethane, Phenolharze, Polyesterharze und Melaminharze. Die magnetischen Partikel bestehen überwiegend aus $Fe_2O_3$ und die abriebfesten Partikel bevorzugt aus keramischen Materialien mit einer Mohs'schen Härte $\geqslant 9$, wie z. B. harte Oxide und dabei besondere $Al_2O_3$, Siliciumcarbid, Siliciumnitrid und Titancarbid. Die Dicke der Magnetschicht liegt zwischen 0,1 und 1 µm. Die erfindungsgemäße Magnetplatte genügt den magnetischen Spezifikationen, welche für die bekannten Magnetplatten verbindlich sind. Die Merkmale, durch welche sich die erfindungsgemäße von den bekannten Magnetplatten unterscheidet, bewirken eine erhöhte Zuverlässigkeit und Haltbarkeit.

Das erfindungsgemäße Verfahren unterscheidet sich von dem bekannten Verfahren durch die Behandlung der abriebfesten Partikel, d. h. deren Umhülllung mit einer Schicht bevor diese zusammen mit den magnetischen Partikeln in dem Bindemittel dispergiert werden.

Die einhüllende Schicht kann beispielsweise aus $SiO_2/Al_2O_3$ bestehen. Überraschenderweise hat sich herausgestellt, daß eine so zusammengesetzte Schicht eine ungefähr 10 fach vergrößerte spezifische Oberfläche gegenüber aus Aluminiumoxid bestehenden abriebfesten Partikeln hat. Die Vergrößerung der spezifischen Oberfläche wurde mittels der Tieftemperatur-Stickstoffadsorptionsmethode nach BET (Brunauer, Emmett und Teller) ermittelt. Durch die Vergrößerung der Oberfläche verbessert sich die Verankerung der abriebfesten Partikel in dem Bindemittel wesentlich. Die Abriebfestigkeit der eingehüllten abriebfesten Partikel wird nach wie vor durch die Abriebfestigkeit des Partikelmaterials bestimmt, so daß durch die Einhüllung mit der $SiO_2/Al_2O_3$-Schicht der Verschleiß der Magnetschicht bei Beanspruchung durch den Magnetkopf wesentlich verringert wird. Die vergrößerte spezifische Oberfläche verbessert auch an den Stellen, wo die abriebfesten Partikel an der Oberfläche der Magnetschicht freiliegen, die Benetzbarkeit mit dem Gleitmittel. Dadurch wird die Reibungskraft genau an den Stellen, wo der Kontakt zwischen der Magnetplatte und dem Magnetkopf hauptsächlich stattfindet, beachtlich verringert. Auch dadurch wird die Gefahr, daß durch die Reibung mit dem Magnetkopf einzelne Partikel aus der Magnetschicht herausgerissen werden, vermindert. Vorzugsweise sind die Teilchendurchmesser um den Faktor 2 bis 10 kleiner als die Dicken der Magnetschicht. Dadurch läßt sich der Lesesignalverlust so stark vermindern, daß es zu wesentlich weniger magnetischen Defekten kommt. Auch der magnetische Grundgeräuschpegel wird durch die Verkleinerung der abriebfesten Partikel wesentlich werbes. sert. Besonders günstig werden diese Parameter beeinflußt, wenn man eine Magnetschicht aus einer Doppelschicht vorsieht, in der die abriebfesten Partikel nur in der oberen Schicht dispergiert sind. D. h., daß alle abriebfesten Partikel sich in Oberflächennähe befinden und dort den Verschleiß vermindern.

Hergestellt wird die $SiO_2/Al_2O_3$-Schicht bevorzugt, indem die abriebfesten Partikel in Wasser dispergiert und dann unter Einhaltung festgelegter $p_H$-Werte im basischen Bereich und Temperaturen zunächst mit einer Silikat- und dann mit einer Aluminiumsalzlösung behandelt werden. $SiO_2/Al_2O_3$-Schichten auf Partikeln aus Aluminiumoxid, welche sehr gut haften und gegenüber den Aluminiumoxidpartikeln eine ungefähr 10 fach vergrößerte spezifische Oberfläche aufweisen, werden beispielsweise mit dem folgenden Verfahren erzeugt :

45 g $Al_2O_3$-Partikel des gewählten Korngrößenbereiches werden mit 300 ml destilliertem Wasser unter Rühren bei ungefähr 2 000 Umdrehungen pro Minute auf 90 °C erhitzt. Der $p_H$-Wert wird durch tropfenweise Zugabe von NaOH-Lösung auf 10,0 eingestellt. Nach Zugabe von 20 ml einer 40 %igen Natriumsilikatlösung wird der $p_H$-Wert sehr schnell durch tropfenweise Zugabe von Salzsäure auf 9,0 abgesenkt. Das Rühren wird eine Stunde lang fortgesetzt, wobei die Temperatur von 90 °C aufrechterhalten wird und Abweichungen vom $p_H$-Wert von $9{,}0 \pm 0{,}1$ durch Zugabe von NaOH bzw. HCl korrigiert werden. Nach Ablauf der Reaktionszeit werden 20 ml einer 50 %igen Aluminumsulfatlösung sehr schnell zugesetzt und der $p_H$-Wert sofort durch Zugabe von Salzsäure auf 8,0 reduziert. Nach weiteren 60 Minuten Reaktionszeit unter Fortsetzung des Rührens und der Einhaltung einer Reaktionstemperatur im Bereich zwischen 93 und 97 °C ist die Behandlung beendet. Die so umhüllten Aluminiumoxidpartikel werden abfiltriert, gründlich mit destilliertem Wasser gespült, bei 150 °C getrocknet und schließlich pulverisiert.

Die umhüllten Partikel werden wie oben angegeben bei der Herstellung von Magnetplatten eingesetzt, d. h. die umhüllten Partikel werden zusammen mit dem Bindemittel, wie z. B. einem Epoxidharzpräparat, den magnetischen Partikeln, z. B. aus $\gamma$-$Fe_2O_3$, und gegebenenfalls Zusätzen, wie einem Netzmittel, in einem Lösungsmittel oder Lösungsmittelgemisch dispergiert. Solche Dispersionen werden in Rührwerken, Kugelmühlen bzw. Perlmühlen erzeugt. Die Dispersion besteht bevorzugt — jeweils in Gewichtsprozent — zu ungefähr 60 % aus einem Lösungsmittelgemisch (Gemisch aus Xylol, Ethylamylketon und Isophoron) und zu ungefähr 40 % aus einem Feststoffgemisch (ungefähr 50 % Bindemittel, ungefähr 49 % $Fe_2O_3$ und ungefähr 1 % $Al_2O_3$). Mit der fertigen Dispersion wird das Magnetplattensubstrat beschichtet und anschließend wird mittels Abschleuderns die gewünschte Schichtdicke eingestellt. Es folgt das Aushärten der Magnetschicht, daraufhin wird die Oberfläche der Magnetschicht poliert und schließlich wird die polierte Oberfläche — gegebenenfalls nach einem Reinigungsschritt — mit einem Gleitmittelfilm versehen. Es schließen sich Tests an, bei denen festgestellt wird, daß die so hergestellte Magnetplatte eine sehr gute Abriebfestigkeit hat und daß im Betrieb praktisch kein Herausreißen von abriebfesten Partikeln stattfindet.

Zur Herstellung einer Magnetplatte mit einer Doppelschicht als Magnetschicht, wobei sich nur in der oberen Schicht eingehüllte abriebfeste Partikel befinden, werden zwei Dispersionen erzeugt, welche sich dadurch unterscheiden, daß nur die eine von ihnen eingehüllte, abriebfeste Partikel enthält. Zunächst wird dann das Substrat mit der kein abriebfestes Material enthaltenden Dispersion beschichtet und dann die gewünschte Schichtdicke durch Abschleudern eingestellt. Auf dieser ersten Schicht wird dann in gleicher Weise aus der abriebfestes Material enthaltenden Dispersion eine zweite Schicht festgelegter Dicke erzeugt. Es schließen sich dann angefangen mit dem Aushärten, die oben angegebenen Verfahrensschritt an.

Bestehen die abriebfesten Partikel aus einem harten Oxid, welches an der Oberfläche OH-Gruppen aufweist — $Al_2O_3$ erfüllt diese Bedingung — so ist es vorteilhaft, wenn die einhüllende Schicht aus Teflon besteht, welches mit dem harten Oxid und auch mit der z. B. aus einem Harz bestehenden Matrix chemisch verbunden ist. In vorteilhafter Weise erfolgt die Bindung des Teflons an das harte Oxid über ein Silanderivat und gegebenenfalls einen Initiatorrest und die Bindung des Teflons an die Harzmatrix über eine Aminbrücke. Die Fig. 3 zeigt schematisch in strukturformelmäßiger Darstellung eine derartige chemische Bindung einer Teflonumhüllung einerseits an ein abriebfestes Partikel und andererseits an die Harzmatrix. In der Fig. 3 bezeichnet das Bezugszeichen I im Querschnitt einen Ausschnitt aus einem abriebfesten Partikel. Mit der Teflonkette IV ist das abriebfeste Partikel über das Silanderivat II und den Initiatorrest III verbunden. Mit dem als Bindemittel dienenden Epoxidharz VI ist die Teflonkette IV über eine Aminbrücke V verbunden. Die teflonumhüllten abriebfesten Partikel haben eine annäherungsweise kugelige Gestalt und ihr Durchmesser ist bevorzugt kleiner — um den Faktor 2 bis 10 — als die Dicke der fertigen Magnetschicht (0,1 bis 1 µm). Außer Epoxidharzen kommen als Bindemittel solche in Frage, für welche es Kopplungsreagentien gibt, die sowohl Gruppen enthalten, welche mit Tetrafluorethylen zu reagieren vermögen als auch Gruppen, welche mit dem Bindemittel reagieren können. Bei der Verwendung von Aminen als Kopplungsreagentien, erfüllen diese Voraussetzung außer Epoxidharzen beispielsweise Polyurethane und Melaminharze.

Es hat sich gezeigt, daß die teflonumhüllten abriebfesten Partikel außerordentlich fest in der Harzmatrix verankert sind und daß auch die Gleiteigenschaften der Magnetplatte, wenn der Magnetkopf mit ihr Berührung hat, hervorragend sind.

Zur Herstellung der in der Fig. 3 gezeigten Struktur werden die abriebfesten Teilchen, welche aus einem harten Oxid mit OH-Gruppen an der Oberfläche bestehen, mit einem Silanderivat entsprechend der Reaktion (1) zur Reaktion gebracht.

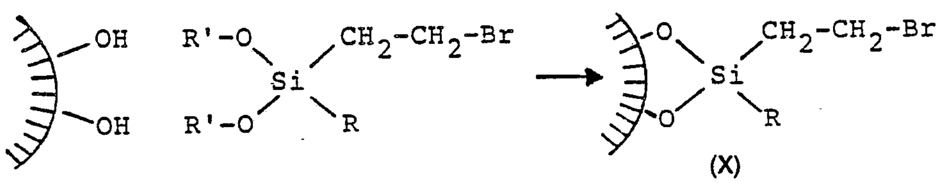

(X)

(1)

Als Silanderivat kommen beispielsweise Tri-ethoxybromethylsilan oder Trimethoxybromethylsilan in Frage. Bei der Reaktion entsteht das Reaktionsprodukt (X). Mit einer Grignard-Reaktion wird aus dem Reaktionsprodukt (X) das Reaktionsprodukt (XI) entsprechend der Reaktion (2) erzeugt.

(X) + Mg

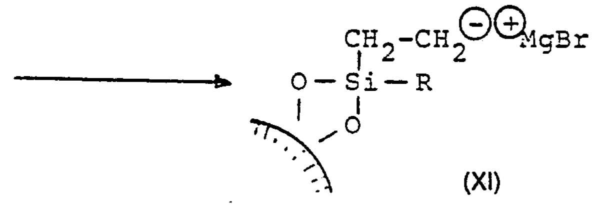

(XI)

(2)

Das Reaktionsprodukt (XI) wird mit einem Initiator, beispielsweise 1,1-Azobiszyklohexanoncarbonitril, gemäß der Reaktion (3) zum Reaktionsprodukt (XII) umgesetzt.

(XI) +

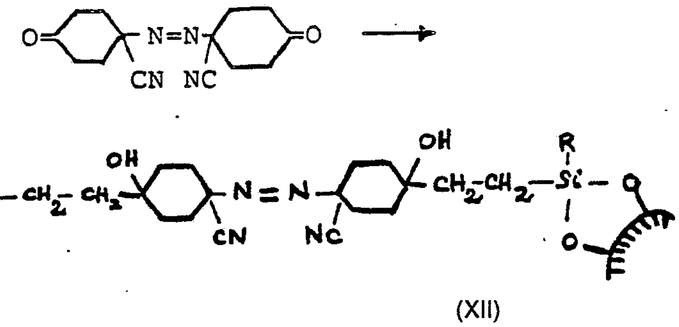

(XII)

(3)

Das Reaktionsprodukt (XII) wird mit Tetrafluorethylen zum Reaktionsprodukt (XIII) gemäß der Reaktion (4) copolymerisiert.

(XII)

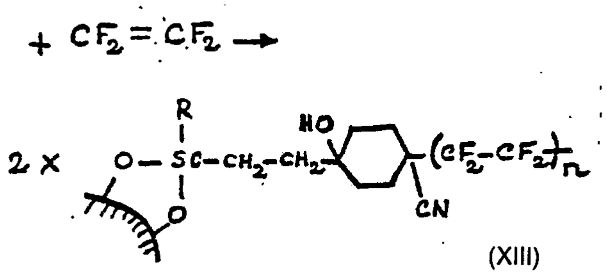

(XIII) (4)

In einem Plasma wird die in dem Reaktionsprodukt (XIII) enthaltene $—CF_2—CF_2—CF_2$-Gruppe mit einem zuvor in dem Plasma angeregten (siehe Reaktion (5)) Amin, wie z. B. Butylamin oder Amylamin, unter Bildung des Reaktionsprodukts (XIV) gemäß der Reaktion (6) zur Reaktion gebracht.

$$R—CH_2—CH_2—NH_2 \xrightarrow{\text{PLASMA}} R^{\cdot} + {}^{\cdot}CH_2—CH_2—NH_2 \qquad (5)$$

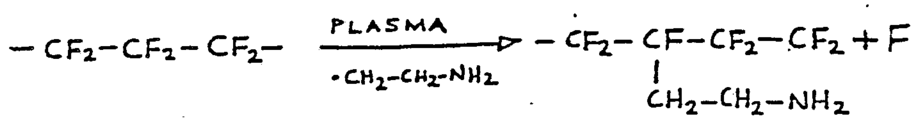


(6)

Bei der Reaktion bildet sich das Reaktionsprodukt (XIV). (Die in der Reaktion (6) angegebene Formel des Reaktionsprodukts stellt nur den für die Reaktion relevanten Ausschnitt aus (XIV), nämlich einen Ausschnitt aus der Teflonkette und eine Seitenkette mit einer Amingruppe, dar). Das Reaktionsprodukt (XIV), bei dem es sich um die umhüllten abriebfesten Partikel handelt, wird zusammen mit — bevorzugt — Eisenoxidpartikeln und dem Bindemittel, welches bevorzugt aus Epoxidharz besteht, in einem Lösungsmittel dispergiert, auf das Plattensubstrat aufgeschleudert und dann ausgehärtet. Beim Aushärten bildet sich aus dem Reaktionsprodukt (XIV) und dem Epoxydharz gemäß der Reaktion (7) das Reaktionsprodukt (XV), bei welchem es sich um das in der Fig. 3 gezeigte Produkt handelt.

(XIV)

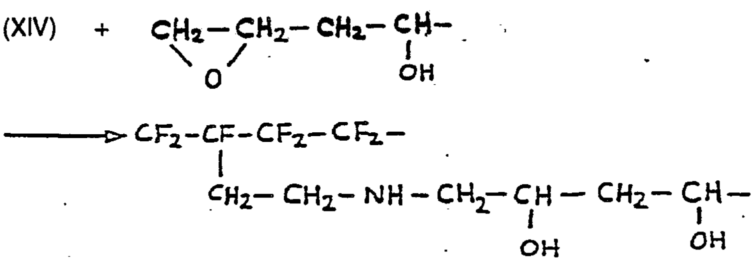

(XV) (7)

Die in der Reaktion (7) angegebene Formel des Reaktionsprodukts stellt nur den für die Reaktion relevanten Ausschnitt aus (XV) dar.

Die chemische Bindung zwischen den abriebfesten Partikeln und dem Teflon kann auch erreicht werden, ohne daß ein Initiatorrest zwischen das Siloxan und die Teflonkette eingebaut wird. Dazu werden die abriebfesten Teilchen aus dem harten Oxid mit OH-Gruppen an der Teilchenoberfläche, wie bereits beschrieben, mit einem Silanderivat wie z. B. Vinyltriethoxysilan, Vinyltrimethoxysilan, Propenyltriethoxysilan und Propenyltrimethoxysilan entsprechend der Reaktion (8) behandelt.

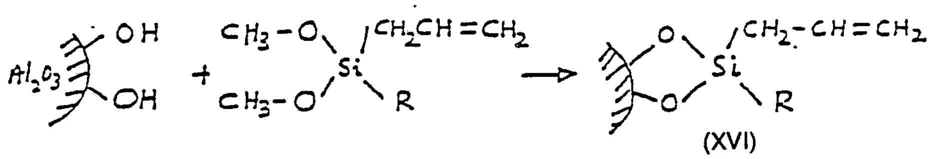

(XVI) (8)

Erzeugt wird dabei das Reaktionsprodukt (XVI). Das Reaktionsprodukt (XVI) copolymerisiert mit Tetrafluorethylen entsprechend der Reaktion (9) unter Bildung des Reaktionsprodukts (XVII), wobei die Reaktion entweder photochemisch oder thermisch initiiert wird.

(XVI) + INITIATOR + $CF_2=CF_2$

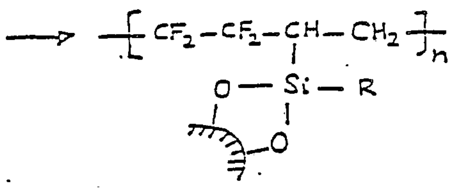

(9)

(XVII)

Als Initiatoren werden bei thermischer Initiierung beispielsweise 2(tert.-butylazo)isobutyronitril

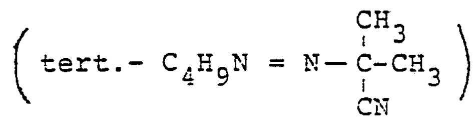

und bei photochemischer Initiierung Benzophenon

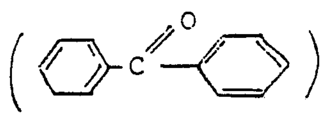

angewandt. Das Reaktionsprodukt (XVII) wird in derselben Weise weiterbehandelt wie es für das Reaktionsprodukt (XIII) weiter oben beschrieben worden ist.

Das zuletzt genannte Verfahren zur Herstellung der Bindung zwischen den abriebfesten Partikeln und dem Teflon wird bevorzugt in der folgenden Weise durchgeführt :

700 g $Al_2O_3$-Partikel werden in 1 400 ml destilliertem Wasser unter Rühren aufgeschlemmt. Zu der Aufschlemmung läßt man 7 ml Vinyltriethoxysilan zutropfen und rührt anschließend ungefähr noch 30 Minuten. Dann wird abgesaugt, dreimal mit Äthanol gewaschen und anschließend drei Tage im Hochvakuum bei 30 °C getrocknet und daraufhin gesiebt. Das Siloxan belegte $Al_2O_3$ wird in 2 Liter destiliertem Wasser unter Rühren dispergiert und zu der Dispersion 140 ml einer 10 %igen Lösung von 2(tert.-butylazo)isobutyronitril in Propanol zugegeben. Die Dispersion wird eine Minute lang auf 90 °C erhitzt und anschließend mit Eiswasser auf 0 °C abgekühlt. Es wird dann Tetrafluorethylen eingeleitet, bis die gewünschte Partikelgröße erreicht ist. Die Größenänderung wird mikroskopisch und über die Gewichtszunahme, welche ungefähr 50 % betragen soll, kontrolliert.

Das so erhaltene Reaktionsprodukt (es handelt sich dabei um das Reaktionsprodukt (XVII)), wie auch das bei dem über die Grignard-Verbindung verlaufende Verfahren erhaltene Reaktionsprodukt (XIII) werden bevorzugt wie folgt weiterbehandelt :

In einem Glimmentladungsreaktor, welcher beispielsweise bei einer Leistung von 100 Watt, einem Druck von ungefähr 1, 33 mbar und einer Hochfrequenz von 13 MHz arbeitet, werden die teflonbeschichteten Aluminiumoxidpartikel mit einem Amin umgesetzt. Dazu wird beispielsweise Butylamin in den Glimmentladungsreaktor geleitet, in welchem sich die Aluminiumoxidpartikel befinden und mittels Ultraschall bewegt werden. Die Dosierung des Butylamins erfolgt in der Weise, daß Stickstoff als Trägergas mit einer Flußmenge von 100 ml/min über siedendes Butylamin und dann in den Glimmentladungsreaktor geleitet wird. Das Butylamin wird in dem im Reaktor erzeugten Plasma aktiviert und reagiert in diesem Zustand mit der Teflonumhüllung der Aluminiumoxidpartikel.

Das in dem Glimmentladungsreaktor erhaltene Produkt wird mit $\gamma$-$Fe_2O_3$ in gelöstem Bindemittel dispergiert. Der Feststoffanteil in der Dispersion hat folgende Zusammensetzung : 1,5 Gew.-% umhüllte Aluminiumoxidpartikel, 49 % $\gamma$-$Fe_2O_3$, 30 % Epoxidharz, 18 % Phenolharz, z. B. Methylonharz und 1,5 Gew.-% Zusatzstoffe. Das Lösungsmittel besteht bevorzugt aus einem Xylol, Ethylamylketon und Isophoron enthaltenden Gemisch. Die Menge des Lösungsmittels wird so bemessen, daß mit der Dispersion eine Aluminiumsubstratplatte mit der gewünschten Dicke beschichtet werden kann. Bevorzugt ist das Gewichtsverhältnis von Feststoffanteil zu Lösungsmittelanteil 40 : 60. Zum Dispergieren werden bevorzugt Kugelmühlen, Rührwerke oder Perlmühlen eingesetzt. Nach dem Aufschleudern der Dispersion auf das Aluminiumplattensubstrat wird ausgehärtet, indem es ungefähr 2 Stunden lang auf 235 °C erhitzt wird. Schließlich wird die Magnetschicht poliert und — gegebenenfalls nach einem Reinigungsschritt — mit einem Gleitmittelfilm versehen.

**Patentansprüche**

1. Magnetplatte, welche eine auf einem Substrat aufgebrachte, aus einem Bindemittel, magnetischen Partikeln, wie $\gamma$-$Fe_2O_3$, und Partikeln aus einem abriebfesten Material bestehende Magnetschicht

aufweist, dadurch gekennzeichnet, daß die abriebfesten Partikel (5, I) mit einer die Binding zum Bindemittel verstärkenden Schicht (12, IV) eingehüllt sind.

2. Magnetplatte nach Patentanspruch 1, dadurch gekennzeichnet, daß der Durchmesser der abriebfesten Partikel (5, I) wesentlich kleiner als die Dicke der Magnetschicht ist.

3. Magnetplatte nach Patentanspruch 1 oder 2, dadurch gekennzeichnet, daß die abriebfesten Partikel (5) aus einem harten keramischen Material, vorzugsweise aus Aluminiumoxid, Siliciumcarbid oder Siliciumnitrid und die einhüllende Schicht (12) aus $SiO_2/Al_2O_3$ bestehen.

4. Magnetplatte nach Patentanspruch 1 oder 2, dadurch gekennzeichnet, daß die abriebfesten Partikel (I) aus einem harten Oxid, wie z. B. $Al_2O_3$, mit OH-Gruppen an der Partikeloberfläche und die einhüllende Schicht (IV) aus Teflon bestehen.

5. Magnetplatte nach Patentanspruch 4, dadurch gekennzeichnet, daß die Teflonumhüllung (IV) mit den abriebfesten Partikeln (I) über ein Silanderivat (II) und gegebenfalls einen Initiatorrest (III) und mit dem aus einem Epoxidharz, einem Polyurethan oder einem Melaminharz bestehenden Bindemittel (VI) über eine Aminbrücke (V) chemisch verbunden ist.

6. Verfahren zum Herstellen einer Magnetplatte, nach einem der Patentansprüche 1 bis 5, bei dem auf ein Plattensubstrat eine Dispersion aus einem Bindemittel, magnetischen Partikeln und abriebfesten Partikeln in einem Lösungsmittel gleichmäßig aufgebracht und dann gehärtet wird, dadurch gekennzeichnet, daß die abriebfesten Partikel, bevor sie dispergiert werden, mit einer Schicht (12, IV) aus einem Material, welches eine festere Bindung mit dem Bindemittel eingeht, als das Material aus dem die abriebfesten Partikel (5, I) bestehen, umhüllt werden.

7. Verfahren nach Patentanspruch 6, zur Herstellung einer Magnetplatte gemäß dem Patentanspruch 3, dadurch gekennzeichnet, daß die abriebfesten Partikel (5) in Wasser aufgeschlemmt werden, die Aufschlemmung auf etwa 90 °C erhitzt und dabei ein $p_H$-Wert von 10 durch Zugabe einer Base eingestellt wird, daß anschließend eine Alkalimetallsilikatlösung zugegeben wird, daß anschließend eine Alkalimetallsilikatlösung zugegeben wird, daß dann der $p_H$-Wert durch Säurezugabe auf 9 abgesenkt wird und dann eine Stunde dispergiert wird, daß daraufhin eine Aluminiumsulfatlösung zugesetzt und der $p_H$-Wert durch Säurezugabe auf 8 reduziert wird und daß schließlich nocheinmal eine Stunde zwischen etwa 93 und etwa 97 °C dispergiert wird.

8. Verfahren nach Patentanspruch 6, zum Herstellen einer Magnetplatte gemäß einem der Patentansprüche 4 oder 5, dadurch gekennzeichnet, daß mindestens eine Alkoxygruppe eines Silanderivats, das außerdem mindestens eine endständige reaktive Gruppe aufweist, mit OH-Gruppen an der Oberfläche des abriebfesten Partikels (I) zur Reaktion gebracht wird, daß das Reaktionsprodukt unter Vermittlung eines Initiators mit Tetrafluorethylen copolymerisiert wird, daß in einem Plasma, in welches ein Alkylamin geleitet wird, Alkylaminreste an die Teflon-Ketten gepfropft werden und daß das so modifizierte und die abriebfesten Partikel (I) einhüllende Teflon bei der üblichen Vernetzungsreaktion des Bindemittels über $NH_2$-Gruppen an das Netzwerk des Bindemittels (VI) gekoppelt wird.

9. Verfahren nach Patentanspruch 8, dadurch gekennzeichnet, daß zur Umhüllung der abriebfesten Partikel (I) mit Teflon mindestens eine Alkoxygruppe eines Silanderivats das eine endständige Vinylgruppe aufweist, mit OH-Gruppen an der Oberfläche der abriebfesten Partikel zur Reaktion gebracht wird und daß das Reaktionsprodukt (XVI) mittels thermischer oder photochemischer Initiierung mit Tetrafluorethylen copolymerisiert wird.

10. Verfahren nach Patentanspruch 8, dadurch gekennzeichnet, daß zur Umhüllung der abriebfesten Partikel mit Teflon mindestens eine Alkoxygruppe eines Silanderivats, das endständiges Brom aufweist, mit OH-Gruppen an der Oberfläche der abriebfesten Partikel (I) zur Reaktion gebracht wird, ausschließlich eine Grignard-Reaktion durchgeführt wird, und das Reaktionsprodukt (XI) dann mit einem Radikalketteninitiator, wie z. B. 1,1-Azobiszyklohexanoncarbonitril, chemisch verbunden wird und daß das erzeugte Reaktionsprodukt (XII) mit Tetrafluorethylen copolymerisiert wird.

**Claims**

1. Magnetic disk comprising a magnetic layer applied on a substrate and consisting of a binder, magnetic particles, such as $\gamma$-$Fe_2O_3$, and particles of an abrasion-resistant material, characterized in that the abrasion-resistant particles (5, I) are enveloped with a layer (12, IV) intensifying the bonding with the binder.

2. Magnetic disk as claimed in patent claim 1, characterized in that the diameter of the abrasion-resistant particles (5, I) is considerably smaller than the thickness of the magnetic layer.

3. Magnetic disk as claimed in patent claim 1 or 2, characterized in that the abrasion-resistant particles (5) consist of a hard ceramic material, preferably aluminium oxide, silicon carbide or silicon nitride, and in that the enveloping layer (12) consists of $SiO_2/Al_2O_3$.

4. Magnetic disk as claimed in patent claim 1 or 2, characterized in that the abrasion-resistant particles (I) consist of a hard oxide as, e. g. $Al_2O_3$, with OH groups on the particle surface, and in that the enveloping layer (IV) consists of Teflon.

5. Magnetic disk as claimed in patent claim 4, characterized in that the Teflon envelope (IV) is chemically bonded with the abrasion-resistant particles (I) via a silane derivative (II) and, if necessary, an

initiator residue (III), and to the binder (VI) consisting of an epoxide resin, a polyurethane or a melamine resin via an amino bridge (V).

6. Method of making a magnetic disk, as claimed in any one of patent claims 1 to 5, where onto a disk substrate a dispersion consisting of a binder, magnetic particles and abrasion-resistant particles is uniformly deposited in a solvent, and subsequently cured, characterized in that the abrasion-resistant particles, prior to being dispersed, are coated with a layer (12, IV) of a material which enters a more solid bond with the binder than the material of the abrasion-resistant particles (5, I).

7. Method as claimed in patent claim 6, for making a magnetic disk in accordance with patent claim 3, characterized in that the abrasion-resistant particles (5) are suspended in water, that the suspension is heated to approximately 90 °C and a $p_H$ value of 10 is achieved by adding a base, that subsequently an alkali metal silicate solution is admixed, that the $p_H$ value is reduced to 9 by adding an acid, and subsequently dispersed for one hour, that an aluminum sulphate solution is admixed and the $p_H$ value reduced to 8 by adding an acid, and that there follows another hour of dispersion between approximately 93 and approximately 97 °C.

8. Method as claimed in patent claim 6, for making a magnetic disk in accordance with any one of patent claims 4 or 5, characterized in that at least one alkoxy group of a silane derivative also comprising at least one terminal reactive group, is made to react with OH groups on the surface of the abrasion-resistant particle (I), that the reaction product is copolymerized with tetrafluoroethylene, using an initiator, that in a plasma into which an alkylamine is directed alkylamine residues are grafted to the Teflon chains, and that the thus modified Teflon enveloping the abrasion-resistant particles (I) is coupled via $NH_2$ groups in the conventional cross-linking reaction of the binder, to the network of the binder (VI).

9. Method as claimed in patent claim 8, characterized in that for enveloping the abrasion-resistant particles (I) with Teflon at least one alkoxy group of a silane derivative comprising a terminal vinyl group is made to react with OH groups at the surface of the abrasion-resistant particles, ant that the reaction product (XVI) is copolymerized with tetrafluoroethylene by means of thermal or photochemical initiation.

10. Method as claimed in patent claim 8, characterized in that for enveloping the abrasion-resistant particles with Teflon at least one alkoxy group of a silane derivative containing terminal bromine is made to react with OH groups on the surface of the abrasion-resistant particles (I), that subsequently a Grignard reaction is performed and the reaction product (XI) chemically bonded to a radical chain initiator, such as e. g. 1,1-azobiscyclohexanecarbonitrile, and that the thus formed reaction product (XII) is copolymerized with tetrafluoroethylene.

**Revendications**

1. Disque magnétique qui présente une couche magnétique déposée sur un substrat, constituée d'un liant, de particules magnétiques, comme $\gamma$-$Fe_2O_3$, et de particules d'une matière résistant au frottement, caractérisé en ce que les particules résistant au frottement (5, I) sont enrobées avec une couche (12, IV) renforçant la liaison avec le liant.

2. Disque magnétique selon la revendication 1, caractérisé en ce que le diamètre des particules résistant au frottement (5, I) est nettement inférieur à l'épaisseur de la couche magnétique.

3. Disque magnétique selon les revendications 1 ou 2, caractérisé en ce que les particules résistant au frottement (5) se composent d'une matière céramique dure, de préférence d'oxyde d'aluminium, de carbure de silicium ou de nitrure de silicium et la couche enrobante (12) de $SiO_2/Al_2O_3$.

4. Disque magnétique selon les revendications 1 ou 2, caractérisé en ce que les particules résistant au frottement (I) se composent d'un oxyde dur, comme p. ex. $Al_2O_3$, avec des groupes OH à la surface des particules et en ce que la couche enrobante (IV) se compose de Teflon.

5. Disque magnétique selon la revendication 4, caractérisé en ce que l'enrobage de Teflon (IV) est lié chimiquement aux particules résistant au frottement (I) par l'intermédiaire d'un dérivé de silane (II) et éventuellement d'un radical inducteur (III) et avec le liant (VI) constitué d'une résine époxyde, d'un polyuréthane ou d'une résine mélamine.

6. Procédé de préparation d'un disque magnétique selon l'une des revendications 1 à 5, dans lequel on dépose régulièrement sur un substrat de disque une dispersion faite d'un liant, de particules magnétiques et de particules résistant au frottement dans un solvant puis on durcit, caractérisé en ce qu'on enrobe les particules résistant au frottement, avant de les disperser, avec une couche (12, IV) faite d'une matière qui entre en une liaison plus solide avec le liant, que la matière dont se composent les particules résistant au frottement (5, I).

7. Procédé selon la revendication 6, de préparation d'un disque magnétique selon la revendication 3, caractérisé en ce qu'on met en suspension les particules résistant au frottement (5) dans l'eau, en ce qu'on chauffe la suspension à environ 90 °C et qu'on y règle le pH à 10 par addition d'une base, en ce qu'ensuite on ajoute une solution de silicate de métal alcalin, en ce qu'on abaisse ensuite le pH à 9 par addition d'acide et en ce qu'on disperse pendant une heure, en ce qu'on ajoute ensuite une solution de sulfate d'aluminium et en ce qu'on réduit le pH à 8 par addition d'acide et en ce qu'enfin on disperse encore pendant une heure entre environ 93 et environ 97 °C.

8. Procédé selon la revendication 6, de préparation d'un disque magnétique selon l'une des

revendications 4 ou 5, caractérisé en ce qu'on fait réagir au moins un groupe alcoxy d'un dérivé de silane qui en outre présente au moins un groupe réactif en position finale, avec des groupes OH à la surface de la particule résistant au frottement (I), en ce qu'on copolymérise le produit de la réaction avec du tétrafluoréthylène en faisant intervenir un inducteur, en ce que dans un plasma dans lequel on introduit une alcoylamine, on greffe des radicaux alcoylamine sur les chaînes de Teflon et en ce qu'on couple le Teflon ainsi modifié et enrobant les particules résistant au frottement (I) dans la réaction de réticulation habituelle du liant par l'intermédiaire de groupes $NH_2$ au réseau du liant (VI).

9. Procédé selon la revendication 8, caractérisé en ce que pour enrober les particules résistant au frottement (I) avec du Teflon on fait réagir au moins un groupe alcoxy d'un dérivé de silane qui présente un groupe vinyle en position terminale, avec des groupes OH à la surface des particules résistant au frottement et en ce qu'on copolymérise le produit de la réaction (XVI) au moyen d'une induction thermique ou photochimique, avec du tétrafluoréthylène.

10. Procédé selon la revendication 8, caractérisé en ce que pour enrober les particules résistant au frottement avec du Teflon on fait réagir au moins un groupe alcoxy d'un dérivé de silane, qui présente un brome en position finale, avec des groupes OH à la surface des particules résistant au frottement (I), en ce qu'on conduit de façon exclusive une réaction de Grignard, puis en ce qu'on lie chimiquement le produit de la réaction (XI) avec un inducteur de chaînes de radicaux, comme p. ex. le 1,1-azobiscyclohexanonecarbonitrile, et en ce qu'on copolymérise le produit de réaction obtenu (XII) avec du tétrafluoréthylène.

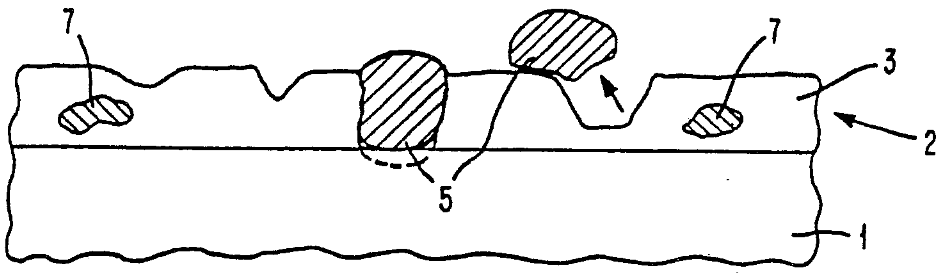


FIG. 1

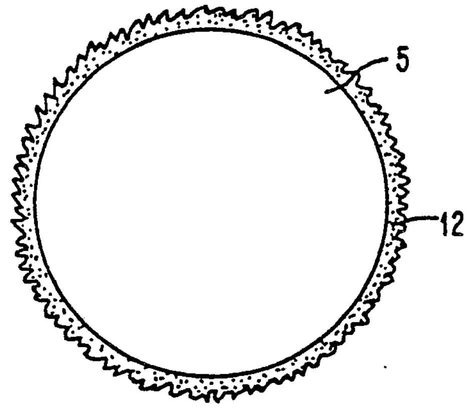


FIG. 2

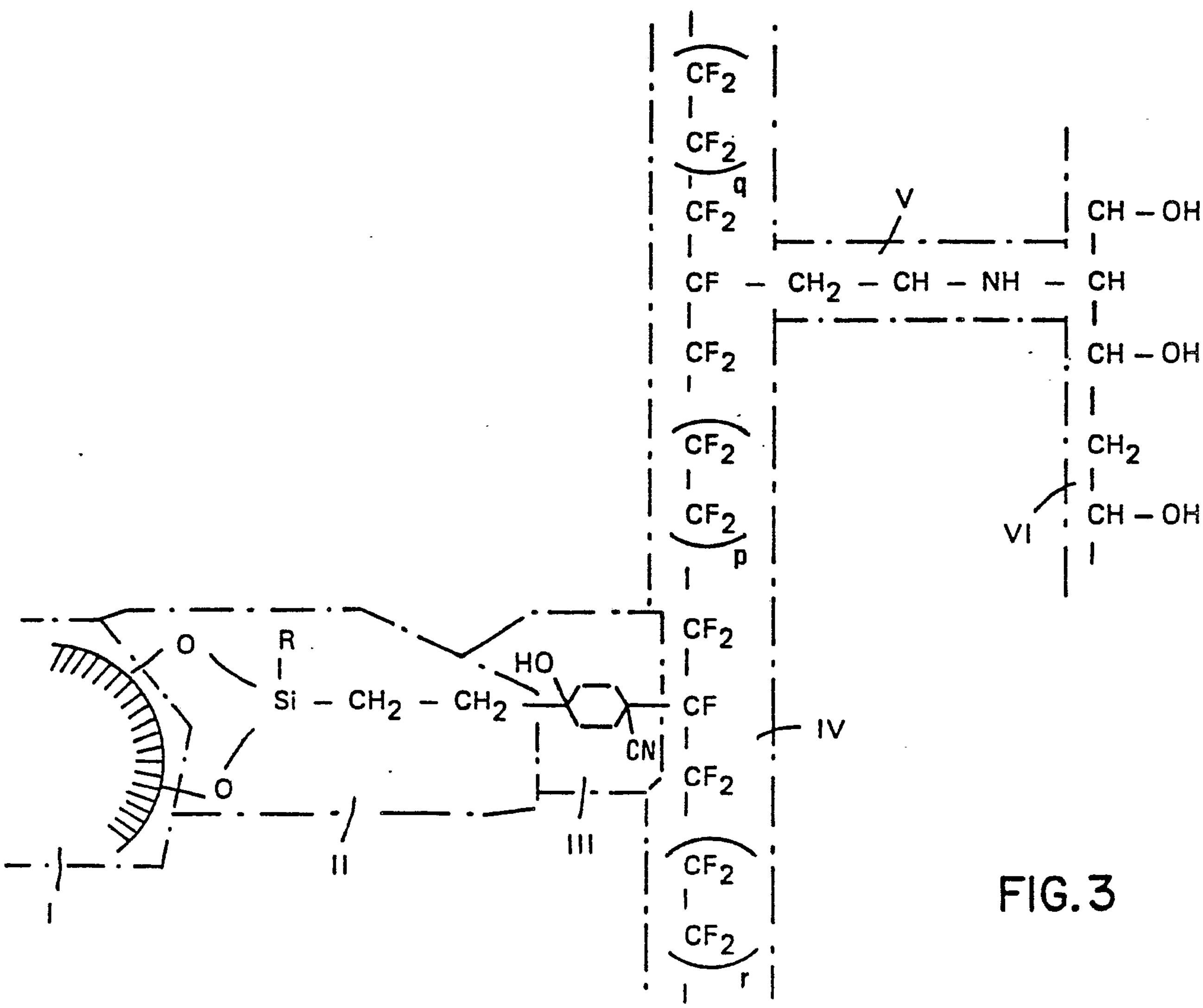

FIG. 3